# EUROPÄISCHE PATENTSCHRIFT

(11) **EP 3 066 511 B1**
(45) Veröffentlichungstag und Bekanntmachung des Hinweises auf die Patenterteilung: **09.12.2020**
(21) Anmeldenummer: 14793509.2
(22) Anmeldetag: 30.10.2014
(51) Int. Cl.: G02B 21/00

(54) **MIKROSKOP FÜR EVANESZENTE BELEUCHTUNG UND PUNKTFÖRMIGE RASTERBELEUCHTUNG**
MICROSCOPE FOR EVANESCENT ILLUMINATION AND POINT-SHAPED RASTER ILLUMINATION
MICROSCOPE POUR L'ÉCLAIRAGE ÉVANESCENT ET L'ÉCLAIRAGE À BALAYAGE PONCTUEL

(30) Priorität: 06.11.2013 DE 102013222562
(43) Veröffentlichungstag der Anmeldung: 14.09.2016
(73) Patentinhaber: Leica Microsystems CMS GmbH, 35578 Wetzlar (DE)
(72) Erfinder: EUTENEUER, Peter, 35633 Lahnau (DE); SCHUMANN, Christian, 35423 Lich (DE)
(74) Vertreter: Grunert, Marcus
(86) Internationale Anmeldenummer: PCT/EP2014/073347
(87) Internationale Veröffentlichungsnummer: WO 2015/067521

(56) Entgegenhaltungen:
- WO-A1-2013/084678
- WO-A2-02/086578
- US-A1- 2007 052 958
- US-A1- 2009 128 827
- US-A1- 2011 069 382

## Beschreibung

Die vorliegende Erfindung betrifft ein Mikroskop für die evaneszente Beleuchtung und die punktförmige Rasterbeleuchtung, wobei ein Wechsel zwischen diesen beiden Beleuchtungsarten möglich ist. Außerdem betrifft die Erfindung ein Verfahren zum Wechseln zwischen den genannten Beleuchtungsarten.

### Stand der Technik

Mikroskope, die einen Wechsel zwischen evaneszenter Beleuchtung und punktförmiger Rasterbeleuchtung eines Objekts zulassen, sind aus dem Stand der Technik bekannt.

Aus der WO 2005/031428 A1 ist ein Mikroskop mit evaneszenter Probenbeleuchtung bekannt, welches zusätzlich eine optische Vorrichtung zur Manipulation einer Probe aufweist. Dabei dient ein Laser zur Erzeugung eines Beleuchtungslichtstrahlenbündels, das in die hintere Pupillenebene des Mikroskopobjektivs fokussiert wird. Zur Einstellung des lateralen Abstands des Fokus dieses Laserlichtstrahlenbündels zur optischen Achse des Objektivs dient eine Strahlablenkeinrichtung, die einen kardanisch aufgehängten Drehspiegel umfasst. Bei ausreichendem Abstand des Fokus zur optischen Achse des Objektivs kommt es an der Grenzfläche zwischen Probenhalter, beispielsweise ein Deckglas, und Probe zur Totalreflexion. Das hierdurch entstehende evaneszente Feld dringt nur in die Grenzfläche der Probe ein und nimmt mit Abstand zu dieser Grenzfläche exponentiell ab. In der Grenzfläche der Probe befindliche Fluorophore werden somit angeregt, während Hintergrundfluoreszenz erheblich reduziert werden kann. Hierdurch wird der Bildkontrast verbessert. Dieses Verfahren wird allgemein als Totalinterne-Reflexions-Fluoreszenzmikroskopie (TIRFM = Total Internal Reflection Fluorescence Microscopy) bezeichnet.

Die Vorrichtung zur Manipulation der Probe umfasst beispielsweise einen Mehrlinienlaser, aus dessen Emissionsspektrum die Anteile der gewünschten Wellenlängen mit einem AOTF ("Acusto-Optical Tunable Filter") auswählbar sind. Mit einer weiteren Strahlablenkeinrichtung wird die Position des Manipulationslichtstrahlenbündels, das in die Probe fokussiert wird, eingestellt.

Zur Umschaltung zwischen Manipulations- und TIRF-Beleuchtung wird in einer Ausführungsform ein Klappspiegel in den TIRF-Beleuchtungsstrahlengang eingeschwenkt, sodass der TIRF-Beleuchtungsstrahlengang auf die unverspiegelte Rückseite des Klappspiegels trifft und an seiner weiteren Ausbreitung gehindert ist. Der Klappspiegel ist in seiner eingeschwenkten Stellung derart angeordnet, dass das Manipulationslichtstrahlenbündel an dem Klappspiegel reflektiert und dadurch in den Beleuchtungsstrahlengang eingekoppelt wird. In einer anderen Ausführung wird eine einzige Laserlichtquelle mit auswählbaren Wellenlängen sowohl für die TIRF- als auch für die Manipulationsbeleuchtung benutzt. In diesem Fall wird zwischen den beiden Beleuchtungsarten umgeschaltet, indem lediglich eine Anpassungsoptik in den Beleuchtungsstrahlengang eingebracht wird. Diese Anpassungsoptik bewirkt, dass bei der TIRF-Beleuchtung das Laserstrahlenbündel in die hintere Pupillenebene des Mikroskopobjektivs fokussiert wird. Ohne Anpassungsoptik wird das Laserstrahlenbündel hingegen in die Probe fokussiert. Bei dem Manipulationslichtstrahlenbündel handelt es sich in der Regel um einen Laserscanstrahl zur (konfokalen) Rastermikroskopie.

Zur Umschaltung zwischen TIRF-Beleuchtung und Manipulationsbeleuchtung werden in dieser Schrift folglich optische Bauteile (Klappspiegel oder Anpassungsoptik) in den Beleuchtungsstrahlengang eingebracht bzw. aus diesem herausgebracht.

Ein konfokales Rastermikroskop umfasst im Allgemeinen eine Lichtquelle, eine Fokussieroptik, mit der das Licht der Quelle auf eine Lochblende - die sogenannte Anregungsblende - fokussiert wird, einen Strahlteiler, eine Strahlablenkeinrichtung zur Strahlsteuerung, eine Mikroskopoptik, eine Detektionsblende und Detektoren zum Nachweis des von der Probe emittierten Detektions-/Fluoreszenzlichtes. Das Beleuchtungslicht wird über einen Strahlteiler eingekoppelt. Das vom Objekt emittierte Fluoreszenz- oder Detektionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird "Descan-Anordnung" genannt. Detektionslicht, das nicht direkt aus der Fokusregion stammt, passiert die Detektionsblende nicht, sodass man eine Punktinformation erhält, die durch sequentielles Abtasten des Objekts mit dem Fokus des Beleuchtungslichtstrahlenbündels zu einem dreidimensionalen Bild zusammen gesetzt werden kann. Meist wird ein dreidimensionales Bild durch schichtweise Bilddatennahme in verschiedenen Fokusebenen erzielt.

US 2011/069382 A1, offenbart eine Anordnung zur Umschaltung zwischen einem sogenannten kollimierten Modus (entsprechend dem konoskopischen Strahlengang) und einem sogenannten konvergenten Modus (entsprechend einem orthoskopischen Strahlengang). Die entsprechenden Strahlengänge werden durch ein Ablenkelement aufgespalten und einem jeweiligen Scanokular für den konoskopischen Strahlengang bzw. für den orthoskopischen Strahlengang zugeführt. Das erste Scanokular fokussiert die Beleuchtungsstrahlen auf die Ebene, die konjugiert zu der Objektebene des Mikroskops liegt. Das zweite Scanokular fokussiert die Beleuchtungsstrahlen in die Ebene eines Diffusors, die konjugiert zur Austrittspupille des Objektivs liegt. Außerhalb dieser beiden Bildebenen ist ein Lochspiegel angeordnet, wobei der orthoskopische Strahlengang gleichsam durch die Rückseite des Lochspiegels durch die Spiegelöffnung tritt, während der konoskopische Strahlengang an der vorderen Spiegelfläche des Lochspiegels reflektiert wird.

Die US 7,187,494 B2 hat ein Mikroskop mit einer Laserlichtquelle zum Gegenstand, wobei das Mikroskop eine Ablenkeinheit zur Dezentrierung des Laserstrahls aus der optischen Achse und ein Objektiv, durch das der Laserstrahl hindurch tritt, aufweist. Zur Umschaltung zwischen Scan- und TIRF-Mikroskopie wird in einem Ausführungsbeispiel eine sogenannte Kollektorlinsenanordnung vorgeschlagen, die in den Beleuchtungsstrahlengang einbringbar bzw. aus diesem herausbringbar angeordnet ist. Ist die Kollektorlinsenanordnung im Beleuchtungsstrahlengang, wird der Laserlichtstrahl dezentriert in die Pupille des Objektivs fokussiert (TIRF-Beleuchtung), während der Laserstrahl auf die Probe fokussiert wird und diese scannt, wenn die Kollektorlinsenanordnung aus dem Beleuchtungsstrahlengang entfernt ist.

Als nachteilig hat sich bei diesem Mikroskop herausgestellt, dass die Umschaltung zwischen TIRF- und Scan-Mikroskopie für viele Anwendungsfälle zu langsam ist und der Justieraufwand für die in den Beleuchtungsstrahlengang einbringbaren Elemente sehr hoch ist, wenn eine präzise Strahlführung in beiden Mikroskopiearten erreicht werden soll.

Aus der WO 2007/020251 A1 ist ein Mikroskop für die TIRF-Mikroskopie bekannt, bei dem Laserlicht einer Laserlichtquelle zunächst über ein Loch in einem Spiegel und anschließend über eine Verstelleinheit in Richtung Mikroskopobjektiv gelenkt wird. Für den Laserstrahl stellt sich das Loch auf der unverspiegelten Seite des Spiegels als normale Blendenöffnung dar, deren Durchmesser dem Durchmesser des Beleuchtungslichtstrahls an der Stelle des Spiegels entspricht. Die verspiegelte Fläche befindet sich auf der anderen Spiegelseite. Über die Verstelleinheit erhält der Laserstrahl seine für die TIRF-Beleuchtung notwendige Dezentrierung. Auf diese Weise kann er unter einem kritischen Winkel auf die Grenzfläche zwischen Probenträger und Objekt fallen. Dieser kritische Winkel hat beispielsweise für den Übergang von Deckglas mit einem Brechungsindex n₁=1,518 zu Wasser mit einem Brechungsindex n₂=1,33 einen Wert von 61°, der Winkel der Totalreflexion.

In einer Ausführungsform wird der Laserstrahl mittels der Verstelleinheit derart rotationssymmetrisch zur Hauptachse des Objektivs geführt, dass im Objekt aufgrund Totalreflexion ein evaneszentes Feld erzeugt wird. Nur wenn der Brechungsindex der Probe bekannt ist, kann der hierfür benötigte Winkel der Totalreflexion berechnet werden. Häufig hat man es allerdings mit unterschiedlichen Proben üblicherweise unbekannter Brechungsindizes zu tun. Um dennoch den Winkel der Totalreflexion empirisch angeben zu können, also die evaneszente Beleuchtung automatisch einstellen zu können, schlägt diese Schrift vor, das Reflexionslicht zu detektieren, das entsteht, bevor der kritische Winkel der Totalreflexion erreicht ist. Dieses Licht gelangt durch das Mikroskopobjektiv zurück zur Verstelleinheit und von dort auf die spiegelnde Fläche des im Beleuchtungsstrahlengang angeordneten Spiegels. Von dort wird das Reflexionslicht in einen Detektor reflektiert. Bei Erreichen des Winkels der Totalreflexion fällt der Anteil des Reflexionslichtes drastisch ab, da der Laserstrahlengang nunmehr im Probenträger an der Grenzfläche zum Objekt totalreflektiert wird und das evaneszente Feld anregt. Aus diesem Übergang lässt sich die Position der Totalreflexion, also der Grad der hierfür notwendigen Ablenkung durch die Verstelleinheit, bestimmen.

In modernen, insbesondere inversen Mikroskopen sind heute zur Untersuchung lebender Systeme wie Zellen verschiedene Beleuchtungsmethoden für ein und dieselbe Probe notwendig. Hierzu werden in aller Regel Laser mit verschiedenen Wellenlängen zeitlich hintereinander in sehr kurzen Zeitabständen zur Anregung oder Manipulation der Probe und zur anschließenden Messung und Auswertung geschaltet. Bei den oben beschriebenen Systemen zur TIRF- und Laserscan-/Rastermikroskopie müssen Spiegel- und/oder Linsenelemente mechanisch in den Beleuchtungsstrahlengang eingebracht oder aus diesem herausgebracht werden. Werden einzelne Beleuchtungsmodule mit Hilfe solcher bewegbaren optischen Elemente zusammengekoppelt, hat jedes Modul seine spezielle Laserlichtbeleuchtung, die für das Experiment häufig aufwändig untereinander synchronisiert werden muss. Das mechanische Ein- und Herausbringen der optischen Elemente wirkt sich negativ auf die gewünschten kurzen Zeitabstände zwischen Anregung/Manipulation und Messung/Auswertung aus. Weiterhin sind solche mechanischen Schalt- und Verschiebeanordnungen in den für die Anwendung notwendigen Genauigkeiten mechanisch aufwändig und entsprechend teuer.

Neben den oben genannten Beleuchtungsmethoden seien im Folgenden noch FRAP (englisch: "Fluorescence Recovery After Photobleaching") und FRET (englisch: "Förster Resonance Energy Transfer") erwähnt. Bei FRAP wird ein Farbstoff in der Probe mit hohen Intensitäten x-y-genau zerstört (ausgeblichen), anschließend werden benachbarte Kompartments über eine geeignete Beleuchtung beispielsweise eine TIRF-Beleuchtung, angeregt. Sind die ausgeblichenen und angeregten Kompartments verbunden, so kann Farbstoff über Diffusion in die ausgeblichenen Bereiche gelangen. Um dies zu detektieren, sind hohe Umschaltraten erforderlich.

Bei der FRET-Methode werden Fluorophore eingesetzt, bei denen der Donor angeregt wird und der Akzeptor aufgrund Resonanzenergietransfer Licht emittiert. Mittels punktgenauer Laserscanning-Beleuchtung einer geeigneten Frequenz können selektiv die Akzeptoren zerstört (ausgeblichen) werden, während die Donoren erhalten bleiben.

Die Intensität des Resonanzenergietransfers hängt unter anderem vom Abstand von Donor und Akzeptor ab. Ist der Abstand zu groß oder sind die Akzeptoren ausgeblichen, so strahlt der Donor selbst die Energie als Fluoreszenzemission ab. Der notwendige Abstand für den Resonanzenergietransfer liegt im Bereich von etwa 0,5 bis 10 nm. Die Messung der Strahlungsintensität des Donorfarbstoffs in Ab- und in Abwesenheit des Akzeptorfarbstoffs lässt Rückschlüsse auf biochemische Vorgänge in der Probe zu. So können Donor bzw. Akzeptor-Farbstoffe an Substanzen gekoppelt werden, deren räumliche Wechselwirkung untersucht werden soll. Findet ein Energietransfer statt, der messbar ist anhand der oben genannten Strahlungsintensität, so stehen die beiden Substanzen in räumlicher Wechselwirkung. Im Vergleich zur FRAP-Methode ist bei der FRET-Methode eine weniger hohe Umschaltrate erforderlich, allerdings sind die Anforderungen an die Auflösung zur Untersuchung der biochemischen Prozesse in den untersuchten Zellen erhöht.

Ein weiteres scannendes Abbildungsverfahren stellt die Multiphotonenmikroskopie dar. Mit Hilfe eines fokussierten Laserstrahls hoher Energie werden dabei nichtlineare optische Effekte erzeugt. Aufbau und Arbeitsweise eines Multiphotonenmikroskops ähneln denen eines konfokalen Laser-Scanningmikroskops. Während letzteres Eindringtiefen je nach Präparat von 50 bis 80 µm erzielt, können mit der Multiphotonenmikroskopie Eindringtiefen von einigen 100 µm erreicht werden. Auf diese Weise kann die Bildgebung in tiefere Gewebebereiche vordringen. Bei der Multi-Photonen-Fluoreszenzmikroskopie werden zwei oder mehr gleichzeitig einfallende Photonen von einem Elektron eines Farbstoffs absorbiert, wobei der Übergang in den Grundzustand unter Abgabe eines kurzwelligen Photons erfolgt. Die Anregungsphotonen besitzen demgegenüber eine längere Wellenlänge. Bei der Zwei-Photonen-Anregung beträgt die Anregungswellenlänge in etwa das Doppelte der normalerweise bei der Fluoreszenzmikroskopie verwendeten Anregungswellenlänge.

Um die gleichzeitige Absorption von zwei oder mehr Photonen zu erreichen, sind hohe Photonendichten erforderlich, die durch gepulste Laser hoher Intensität bereitgestellt werden können. Wie bei einem konfokalen Raster- bzw. Laserscanning-Mikroskop wird der Laserstrahl durch das Objektiv des Mikroskops auf einen Punkt des Präparats fokussiert. Mittels einer Abtasteinheit wird der fokussierte Laserstrahl über das Präparat gescannt. Die abgegebene Fluoreszenzstrahlung wird über das Objektiv und einen dichroitischen Strahlteiler zu einem Detektor geleitet. Die Pausen zwischen zwei Laserpulsen sind so lang, dass die ins Präparat eingebrachte Energie in einem Bruchteil dieser Zeit als Fluoreszenzstrahlung wieder abgegeben werden kann. Die Detektoren messen also die Helligkeit jedes Bildpunktes, sodass nach Abscannen des Präparats ein vollständiges Bild des Präparats zusammengesetzt werden kann.

Ein Vorteil der Multiphotonenmikroskopie gegenüber der konfokalen Laserscanningmikroskopie ist die höhere Eindringtiefe. Beispielsweise wird bei der Zwei-Photonen-Mikroskopie infrarotes Licht zur Anregung eingesetzt, das in biologischem Gewebe viel weniger gestreut und absorbiert wird als sichtbares Licht. Im Gegensatz zur konfokalen Laserscanningmikroskopie kann bei der Multiphotonenmikroskopie die gesamte vom Objektiv aufgenommene Fluoreszenz für das zu erstellende Bild verwendet werden; somit ist keine Lochblende (pinhole) nötig, um Licht aus anderen Ebenen auszufiltern. Die Lichtintensitäten außerhalb der Fokusebene reichen nämlich nicht aus, um dort eine Multiphotonenanregung des Fluoreszenzfarbstoffs zu bewirken. Es ist daher auch nicht nötig, die Fluoreszenzstrahlung über die Scanspiegel aufzufangen ("non-descanned detection"). Mit einem Kurzpuls-Laser und einem integralen Detektor kann ein solches System als TIRF- und Multi-Photonen-System kombiniert werden.

Aufgabe vorliegender Erfindung ist es, ein Mikroskop anzugeben, das ohne mechanisches Ein- und Herausbringen von Optikelementen in bzw. aus dem Beleuchtungsstrahlengang einen schnellen Wechsel zwischen punktförmiger Rasterbeleuchtung (auch Bildscannen) und evaneszenter Beleuchtung (auch Pupillenscannen) ermöglicht. Im Folgenden soll der Beleuchtungsstrahlengang für die punktförmige Rasterbeleuchtung "orthoskopischer Strahlengang" und der Beleuchtungsstrahlengang für die evaneszente Beleuchtung "konoskopischer Strahlengang" genannt werden.

### Kurzfassung der Erfindung

Diese Aufgabe wird durch ein erfindungsgemäßes Mikroskop gemäß Anspruch 1 sowie ein Verfahren gemäß Anspruch 15 gelöst. Das erfindungsgemäße Mikroskop weist ein Objektiv und eine Beleuchtungseinheit zur wahlweisen Erzeugung eines durch das Objektiv verlaufenden orthoskopischen Strahlengang zur punktförmigen Rasterbeleuchtung und eines durch das Objektiv verlaufenden konoskopischen Strahlengang zur evaneszenten Beleuchtung eines Objekts auf. Die Beleuchtungseinheit des Mikroskops umfasst eine Lichtquelle zur Erzeugung von Beleuchtungsstrahlen entlang eines Beleuchtungsstrahlengangs, eine Verstelleinheit zur Ablenkung des Beleuchtungsstrahlengangs und ein der Verstelleinheit nachgeordnetes Scanokular zur Fokussierung der Beleuchtungsstrahlen in eine Bildebene des Scanokulars. Die Verstelleinheit (Scanner) lenkt die Beleuchtungsstrahlen aus der optischen Achse, wobei die abgelenkten Beleuchtungsstrahlen von dem Scanokular in die Bildebene des selbigen fokussiert werden.

Der Verstelleinheit nachgeordnet ist eine feststehende Spiegelfläche mit einem (zumindest teilweise) lichtdurchlässigen und einem (zumindest teilweise) verspiegelten Bereich angeordnet. Der lichtdurchlässige Bereich dient der Erzeugung des orthoskopischen Strahlengangs nach Durchtritt der Beleuchtungsstrahlen durch diesen lichtdurchlässigen Bereich der Spiegelfläche, während der verspiegelte Bereich der Erzeugung des konoskopischen Strahlengangs aus dem Beleuchtungsstrahlengang nach Ablenkung des selbigen an der verspiegelten Fläche dient. Hierbei liegt die Bildebene des Scanokulars bezogen auf den konoskopischen Strahlengang in einer zur Austrittspupille des Objektivs konjugierten Ebene.

Erfindungsgemäß kann bei dem geschilderten Aufbau des Mikroskops der orthoskopische Strahlengang dadurch erzeugt werden, dass der Beleuchtungsstrahlengang mittels der Verstelleinheit derart abgelenkt wird, dass er durch den lichtdurchlässigen Bereich der Spiegelfläche tritt, während der konoskopische Strahlengang dadurch erzeugt wird, dass der Beleuchtungsstrahlengang mittels der Verstelleinheit derart abgelenkt wird, dass er auf den verspiegelten Bereich der Spiegelfläche trifft.

Vorteilhafte Verwendungen der Erfindung sind in den entsprechenden Verwendungsansprüchen angegeben.

Vorteilhafte Ausgestaltungen der Erfindung ergeben sich aus den jeweiligen Unteransprüchen und der nachfolgenden Beschreibung.

### Vorteile der Erfindung

Die vorliegende Erfindung erlaubt einen schnellen Wechsel zwischen den beiden genannten Beleuchtungsarten Bildscannen und Pupillenscannen, wozu Bild- und Pupillenlage im Spiegelflächenbereich vertauscht werden. Die Spiegelfläche ist beispielsweise in der Bildebene des Scanokulars angeordnet. Zum Bildscannen wird der Beleuchtungsstrahlengang von der Verstelleinheit (Scanner) derart abgelenkt, dass die Fokuspunkte der Beleuchtungsstrahlen innerhalb des lichtdurchlässigen Bereichs der feststehenden Spiegelfläche liegen. Der lichtdurchlässige Bereich ist im einfachen Fall eine Öffnung der Spiegelfläche. Alternativ kann die Spiegelfläche im lichtdurchlässigen Bereich anstelle einer spiegelnden, also hochreflektierenden Beschichtung, wie sie in einem verspiegelten Bereich auf das Trägerglas aufgebracht ist, eine stark reflexionsmindernde Beschichtung aufweisen, hat hierzu zweckmäßigerweise die Größe des maximalen Bildscanfeldes, dessen Grenzen durch den Übergang zur evaneszenten Beleuchtung definiert sind: Wird nämlich die Austrittspupille eines Mikroskopobjektivs, hier eines TIRF-Objektivs, bis zur Grenzapertur der Totalreflexion (ca. 1,37) vergrößerungstechnisch über den konoskopischen Strahlengang derart in die Bildebene des Scanokulars abgebildet, dass sie kongruent zum maximalen Bildscanfeld ist und wird die Spiegelfläche mit ihrem lichtdurchlässigen Bereich von der Größe des maximalen Bildscanfeldes unter einem vom 0° verschiedenen Winkel, zweckmäßigerweise unter 45°, in die Bildebene des Scanokulars gestellt, werden die Lichtstrahlen zur Erzeugung evaneszenter Beleuchtung außerhalb des lichtdurchlässigen Bereichs am verspiegelten Bereich in den konoskopischen Strahlengang reflektiert.

Auf diese Weise kann durch einfache Steuerung des Scanwinkels durch den Scanner (Verstelleinheit) zwischen Bildscannen und Pupillenscannen gewechselt werden. Solange nämlich der Scanwinkel in einem Bereich liegt, bei dem die Beleuchtungsstrahlen innerhalb des lichtdurchlässigen Bereichs der Spiegelfläche liegen, kann das Bildscannen, also die punktförmige Rasterbeleuchtung, bis zu einem maximalen Scanfeld erfolgen. Erst wenn der Scanwinkel größer wird, fallen die Beleuchtungsstrahlen der Lichtquelle auf den verspiegelten Bereich der Spiegelfläche und werden in den konoskopischen Strahlengang geleitet und so abgebildet, dass die Beleuchtungsstrahlen auf den äußeren Bereich der Objektivpupille des Objektivs fokussiert werden.

Somit ist ein Übergang von Bildscannen zu Pupillenscannen, also zur evaneszenten Beleuchtung, nur durch Veränderung des Scanwinkels möglich, ohne optische Bauteile in den Beleuchtungsstrahlengang einzubringen oder aus dem Beleuchtungsstrahlengang heraus zu befördern. Alle optischen Bauteile des erfindungsgemäßen Mikroskops können initial fix justiert und brauchen bei Gebrauch des Mikroskops nicht mehr verändert werden. Außerdem kann eine einzige Lichtquelle für beide Strahlengänge verwendet werden, wodurch eine aufwändige Synchronisierung und Justage entfällt; zudem besteht ein entsprechender Kostenvorteil. Das erfindungsgemäße Mikroskop realisiert beide Strahlengänge in einem einzigen System, das insbesondere von einem einzigen Rechner mit zentraler Software angesteuert werden kann. Ein weiterer Vorteil des erfindungsgemäßen Mikroskops ist, dass normales Bildscannen auch mit anderen Objektiven (also nicht TIRF-Objektiven) bis zum maximalen Scanfeld ohne Einschränkungen möglich ist.

Die vorliegende Erfindung eignet sich somit nicht nur für schnelle Wechsel zwischen evaneszenter Beleuchtung und punktförmiger Rasterbeleuchtung, sondern auch als Universalmodul zur Photomanipulation. Hierzu sei auf die in der Beschreibungseinleitung genannten Verfahren, wie FRAP oder FRET, verwiesen. Weiterhin ist die Kombination mit einem Kurzpuls-Laser (z.B. preisgünstiger Faserlaser) und einer integralen Detektion (mit einem so genannten Non-Descanned-Detektor) als preiswertes Multiphotonen-Abbildungssystem denkbar. Durch das Abscannen der Probe im Bildscanmodus kann sie im Sinne der Multiphotonenmikroskopie dreidimensional abgebildet werden. Die Öffnung in der Spiegelfläche beschränkt auch hier, wie bereits erläutert, die Größe des maximalen Scanfeldes. Die Multiphotonen-Mikroskopie wurde ebenfalls in der Beschreibungseinleitung bereits erläutert. Zusammenfassend kann vorliegende Erfindung in verschiedenen scannenden Abbildungsverfahren eingesetzt werden, die sich in folgende Gruppen einteilen lassen: Konfokalmikroskopie (mit z-Auflösung), Weitfeld-Mikroskopie mit Manipulationslaser, Multiphotonen-Mikroskopie und nichtkonfokale Bildaufnahme (ohne z-Auflösung). Die erwähnte Weitfeld-Mikroskopie kann jeweils mit der Multiphotonen-Mikroskopie oder mit der nicht-konfokalen Bildaufnahme (ohne z-Auflösung) kombiniert werden.

Es ist insbesondere vorteilhaft, wenn der lichtdurchlässige Bereich der Spiegelfläche eine einfache Öffnung in einer sonst verspiegelten Spiegelfläche darstellt, wobei die Öffnung zur Hauptachse des Beleuchtungsstrahlengangs zentriert angeordnet ist. Als Hauptachse des Beleuchtungsstrahlengangs soll in dieser Anmeldung die Achse des nicht abgelenkten Beleuchtungsstrahlengangs, also die optische Achse, verstanden werden.

Zur wirksamen Auskopplung der an dem verspiegelten Bereich der Spiegelfläche reflektierten Lichtstrahlen ist die Spiegelfläche geneigt zur Hauptachse des Beleuchtungsstrahlengangs angeordnet, wobei der Neigungswinkel insbesondere 45° beträgt.

Es ist besonders vorteilhaft, wenn der lichtdurchlässige Bereich der Spiegelfläche eine geometrische Form besitzt, deren Projektion auf eine Ebene senkrecht zur Hauptachse des Beleuchtungsstrahlengangs eine Kreisform ergibt. Dies wird durch die Geometrie einer Ellipse erfüllt. Die Achsen der Ellipse sind derart bemessen, dass die erwähnte Projektion eine Kreisform ergibt.

Ab bestimmten Scanwinkeln gelangt das Beleuchtungslicht auf den verspiegelten Bereich der Spiegelfläche und wird in den konoskopischen Strahlengang reflektiert. In diesem Fall ist es zweckmäßig, wenn eine Zusatzoptik zur Einkopplung des konoskopischen Strahlengangs in das Mikroskopobjektiv vorgesehen ist. Diese Zusatzoptik ist insbesondere derart ausgelegt, dass der Fokus der Beleuchtungsstrahlen des konoskopischen Strahlengangs nunmehr in der Austrittspupille des Objektivs, insbesondere an deren Rand, liegt. Vorteilhafterweise umfasst die Zusatzoptik ein Spiegelsystem und ein optisches System, insbesondere in Form einer Bertrandlinse. Während über das Spiegelsystem der konoskopische Strahlengang in Richtung Mikroskopobjektiv geführt wird, ist die Abbildung der Bertrandlinse derart ausgeführt, dass die Beleuchtungsstrahlen am Rand der Austrittspupille des Mikroskopobjektivs fokussiert werden.

Als besonders vorteilhaft hat sich herausgestellt, dass die Zusatzoptik einen Strahlteiler aufweist, der im orthoskopischen Strahlengang angeordnet ist und den konoskopischen Strahlengang mit dem orthoskopischen Strahlengang zusammenführt, bevor beide Strahlengänge das Mikroskopobjektiv durchsetzen.

Eine zweckmäßige Zusatzoptik umfasst folglich nachfolgende optische Bauteile: Eine erste Linse, gefolgt von einem Umlenkspiegel, der den konoskopischen Strahlengang in eine im Wesentlichen parallele Richtung zum orthoskopischen Strahlengang lenkt. Dem Umlenkspiegel folgt ein weiterer Umlenkspiegel, der den konoskopischen Strahlengang im Wesentlichen um 90° umlenkt, um eine zweite Linse zu passieren. Anschließend trifft der konoskopische Strahlengang auf einen Strahlteiler, der im orthoskopischen Strahlengang angeordnet ist, wobei dieser Strahlteiler den orthoskopischen Strahlengang passieren lässt, während er den konoskopischen Strahlengang derart reflektiert, dass beide Strahlengänge zusammen zum Mikroskopobjektiv geführt werden.

In einer besonderen Ausgestaltung des Strahlteilers wird ein Polarisationsstrahlteiler verwendet. In diesem Fall kann zur Beleuchtung polarisiertes Laserlicht verwendet werden, wobei in einen der beiden Strahlengänge eine λ/2-Platte eingebracht wird, um den betreffenden Strahlengang entgegengesetzt zu polarisieren. Beispielsweise kann bei dem eben beschriebenen Aufbau der Zusatzoptik die λ/2-Platte zwischen den beiden Umlenkspiegeln im konoskopischen Strahlengang angeordnet sein. Je nach Polarisation ist der Polarisationsstrahlteiler durchlässig oder reflektierend. Auf diese Weise gelingt eine Strahlteilung bei gleicher Wellenlänge und im betrachteten Fall die Zusammenführung der beiden Strahlengänge bei gleichen Wellenlängen. Sollten für die beiden Beleuchtungsarten unterschiedliche Wellenlängen eingesetzt werden, kann als Strahlteiler ein entsprechender wellenlängensensitiver Strahlteiler verwendet werden.

Es ist weiterhin vorteilhaft, wenn als Lichtquelle der Beleuchtungseinheit des erfindungsgemäßen Mikroskops ein oder mehrere Laser zur Erzeugung von Beleuchtungsstrahlen eines bestimmten Wellenlängenspektrums vorhanden ist bzw. sind, wobei zur Selektion geeigneter Wellenlängen im Beleuchtungsstrahlengang ein Wellenlängenselektor angeordnet ist. Bei letzterem handelt es sich insbesondere um einen AOTF ("Acusto-Optical Tunable Filter"). Mit einem solchen AOTF gelingt eine sehr schnelle Umschaltung und somit Selektion von bestimmten Wellenlängen. Finden die beiden Beleuchtungsarten nämlich mit unterschiedlichen Wellenlängen statt, so gelingt der erfindungsgemäße schnelle Wechsel zwischen diesen Beleuchtungsarten mit zeitgleichem Wechsel der benötigten Wellenlängen. Gleichzeitig kann ein AOTF auch als schneller Shutter verwendet werden, also für eine bestimmte Beleuchtungsart die erforderlichen Wellenlängen in den Beleuchtungsstrahlengang einspeisen und für eine andere Beleuchtungsart keine Laserstrahlen in den Beleuchtungsstrahlengang einspeisen. Sinnvoll ist dies während den Verfahrensumschaltungen, wenn beispielsweise das Laserlicht bei der Bewegung des Scanners in Richtung des konoskopischen Strahlengang ausgeschaltet ist. Weiterhin erfordert eine präzise Manipulation der Probe zusätzlich zu einer genauen Positionierung der Verstelleinheit auch eine Unterdrückung des Lasers während der Bewegung in den Manipulationsbereich.

Die Verstelleinheit (Scanner) zur Ablenkung des Beleuchtungsstrahlengangs ist insbesondere derart ausgebildet, dass eine kreisförmige Ablenkung realisiert werden kann. In diesem Fall kann eine zur Hauptachse des Objektivs rotationssymmetrische TIRF-Beleuchtung realisiert werden. Außerdem kann aber bei Beleuchtung innerhalb des Bildscanfeldes auch eine schiefe Beleuchtung ("Epi-Beleuchtung") realisiert werden, die beispielsweise auch entlang einer Kreisbahn erfolgen kann, so dass im zeitlichen Mittel eine klassische Epi-Beleuchtung vorliegt.

Bezüglich des erfindungsgemäßen Verfahrens zur wahlweisen Erzeugung eines orthoskopischen Strahlengangs und eines konoskopischen Strahlengangs, insbesondere zum schnellen Wechsel zwischen diesen Strahlengängen, sei auf die obigen Ausführungen verwiesen. Gleiches gilt für die erfindungsgemäße Verwendung des erfindungsgemäßen Mikroskops bzw. des erfindungsgemäßen Verfahrens. Die hier geschilderten Merkmale der Erfindung haben für die genannten Aspekte der Erfindung gleiche Bedeutung.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

Figur 1 zeigt den prinzipiellen Aufbau einer Beleuchtungseinheit eines erfindungsgemäßen Mikroskops,
Figur 2 zeigt ein erfindungsgemäßes Mikroskop mit Beleuchtungseinheit für die Weitfeld-Mikroskopie und
Figur 3 zeigt ein erfindungsgemäßes Mikroskop mit Beleuchtungseinheit für die konfokale Mikroskopie.

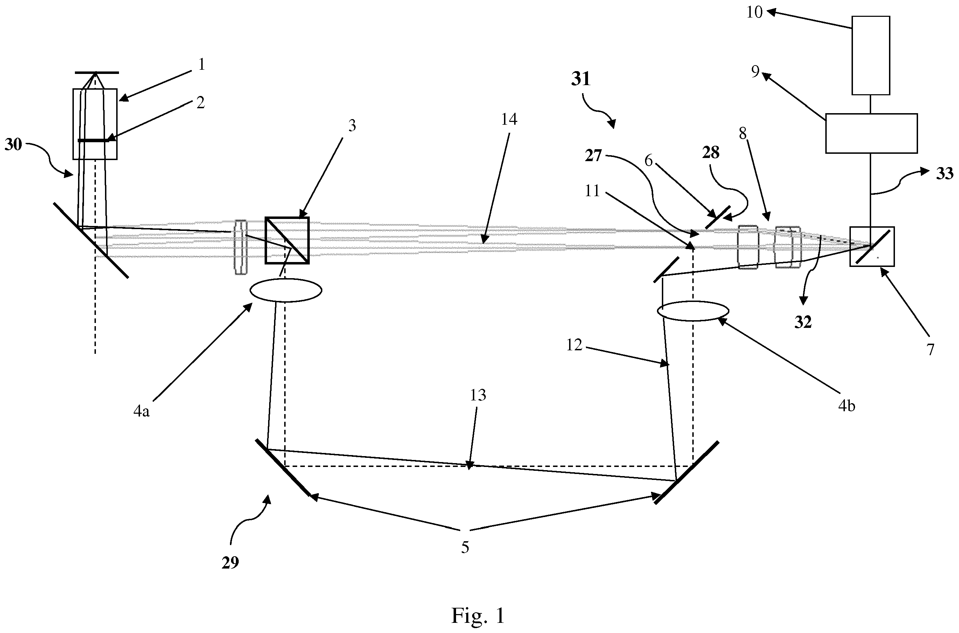

Figur 1 zeigt eine besonders bevorzugte Ausführungsform einer Beleuchtungseinheit zur wahlweisen Erzeugung eines orthoskopischen Strahlengangs 14 und eines konoskopischen Strahlengangs 13 mit der Möglichkeit eines schnellen Wechsels zwischen den korrespondierenden Beleuchtungsarten. Hierzu umfasst die Beleuchtungseinheit 31 einen Laser 10 als Lichtquelle, gefolgt von einem durchstimmbaren akusto-optischen Filter (AOTF) als Wellenlängenselektor 9. Je nach konkreter Anwendung kann die gewünschte Wellenlänge mittels des AOTF 9 aus dem Wellenlängenspektrum des Lasers 10 ausgewählt werden. Die Beleuchtungsstrahlen (Laserlicht) breiten sich entlang des Beleuchtungsstrahlengangs 32 aus und treffen auf eine Verstelleinheit 7, die auch als Scanner bezeichnet wird. x-y-Scanner zur punktgenauen Verstellung des Beleuchtungsstrahlengangs 32 sind an sich aus dem Stand der Technik bekannt. In Figur 1 sind zwei mögliche Beleuchtungsstrahlengänge 32 schematisch dargestellt, wobei sich einer der beiden Beleuchtungsstrahlengänge 32 entlang der Hauptachse 33 (optische Achse) ausbreitet, während der andere eher am Rand des maximal möglichen Bildscanfeldes verläuft. Die Beleuchtungsstrahlen werden von einem Scanokular 8 in die Bildebene 11 des Scanokulars 8 fokussiert. Dort ist eine Spiegelfläche 6, auch als Scan- oder Ringspiegel bezeichnet, angeordnet.

Die Spiegelfläche 6 besteht in diesem Ausführungsbeispiel aus einem Ringspiegel, also einer verspiegelten ringförmigen Fläche 28, die eine lichtdurchlässige Öffnung 27 umgibt. Durch diese Öffnung 27 hindurch tretende Beleuchtungsstrahlen breiten sich in Folge entlang eines orthoskopischen Strahlengangs 14 aus. Sie passieren den Strahlteiler 3 (im Wesentlichen) ungehindert und werden über die Scanlinse 15 und das Objektiv 1 eines Mikroskops 30 (hier nur rudimentär dargestellt) in der Objektebene auf ein Objekt fokussiert. Mittels x-y-Verstellung des Beleuchtungsstrahlengangs 32 kann ein maximales Bildscanfeld und somit ein entsprechendes Feld auf dem Objekt abgetastet werden. Der orthoskopische Strahlengang ermöglicht somit eine punktförmige Rasterbeleuchtung des Objekts. Das maximale Bildscanfeld ist durch die Öffnung 27 in Spiegel 6 festgelegt.

Überschreitet der Scanwinkel einen bestimmten Wert, so trifft der Beleuchtungsstrahlengang außerhalb der Öffnung 27 auf den verspiegelten Bereich 28 des Ringspiegels 6. Der Laserstrahl 12 breitet sich nach Reflexion an der verspiegelten Fläche über die Zusatzoptik 29 entlang der Hauptachse 13 des konoskopischen Strahlengangs aus. Die Zusatzoptik 29 enthält ein Spiegelsystem 5 und ein optisches System 4a, 4b, über die der konoskopische Strahlengang wieder mit dem orthoskopischen Strahlengang vor der Scanlinse 15 zusammengeführt wird. Das optische System 4a, 4b ist derart ausgelegt, dass die Austrittspupille 2 des Mikroskopobjektivs 1, in diesem Fall ein TIRF-Objektiv, bis zur Grenzapertur der Totalreflexion (hier bei ca. 1,37) vergrößerungstechnisch so in die Bildebene 11 des Scanokulars 8 abgebildet wird, dass sie kongruent zum maximalen Bildscanfeld ist. Auf diese Weise ist sichergestellt, dass evaneszente Beleuchtung eintritt, sobald der ScanWinkel der Verstelleinheit 7 einen Wert erreicht, bei dem der Beleuchtungsstrahlengang 32 auf den verspiegelten Bereich 28 der Spiegelfläche 6 trifft. Innerhalb des maximalen Bildscanfeldes kann ohne Einschränkungen normales Bildscannen auch mit anderen Objektiven 1 vorgenommen werden.

Die Zusatzoptik 29 enthält vorteilhafterweise ein Spiegelsystem 5, hier aus zwei Umlenkspiegeln, und ein optisches System 4a und 4b mit der Funktion einer Bertrandlinsen-Einheit.

Die Öffnung 27 in der Spiegelfläche 6 ist mit Vorteil elliptisch, so dass eine Projektion der Öffnung 27 auf eine Ebene, die senkrecht zur Hauptachse 33 steht, ein kreisrundes Bildscanfeld ergibt. In diesem Ausführungsbeispiel sind alle spiegelnden Flächen um 45° zu den jeweiligen Hauptachsen gekippt, sodass im Wesentlichen 90°-Reflexionen der Strahlengänge an den Spiegelflächen stattfinden.

In vielen Anwendungsfällen wird die punktförmige Rasterbeleuchtung mit einer anderen Wellenlänge als die evaneszente Beleuchtung erfolgen. In diesem Fall kann der Wechsel zwischen den benötigten Wellenlängen durch das AOTF 9 in sehr kurzen Umschaltzeiten vorgenommen werden. Es sind auch Anwendungen denkbar, bei denen beide Beleuchtungsarten mit der selben Wellenlänge erfolgen. Weiterhin sind Ausführungsformen denkbar, bei denen nur die punktförmige Rasterbeleuchtung oder nur die evaneszente Beleuchtung (eventuell neben anderen Beleuchtungsarten) zeitweise benötigt wird. Für diesen Fall kann das AOTF 9 als Shutter betrieben werden, der je nach Bedarf die geeignete Wellenlänge selektiert oder ausblendet.

Bei dem Strahlteiler 3 kann es sich um einen wellenlängenspezifischen Strahlteiler oder einen Polarisationsstrahlteiler handeln. Werden für die Strahlengänge 13 und 14 unterschiedliche Wellenlängen benötigt, so bietet sich ein wellenlängenspezifischer Strahlteiler 3 an. Soll hingegen auch der mögliche Fall gleicher Wellenlängen abgedeckt werden, so kann als Strahlteiler 3 ein Polarisationsteiler eingesetzt werden. Hierzu wird dann polarisiertes Laserlicht verwendet, dessen Polarisationsrichtung beispielsweise bei Ausbreitung entlang des orthoskopischen Strahlengangs 14 ungehindert den Strahlteiler 3 passiert. Im konoskopischen Strahlengang 13 wird hingegen, vorzugsweise zwischen den beiden Umlenkspiegeln des Spiegelsystems 5, ein λ/2-Plättchen eingebracht. Dieses bewirkt eine Drehung der Polarisationsrichtung um 90°. Für diese Polarisationsrichtung ist der Strahlteiler 3 als Polarisationsteiler reflektierend. Auf diese Weise werden, wie in Figur 1 dargestellt, die beiden Strahlengänge wieder zusammengeführt.

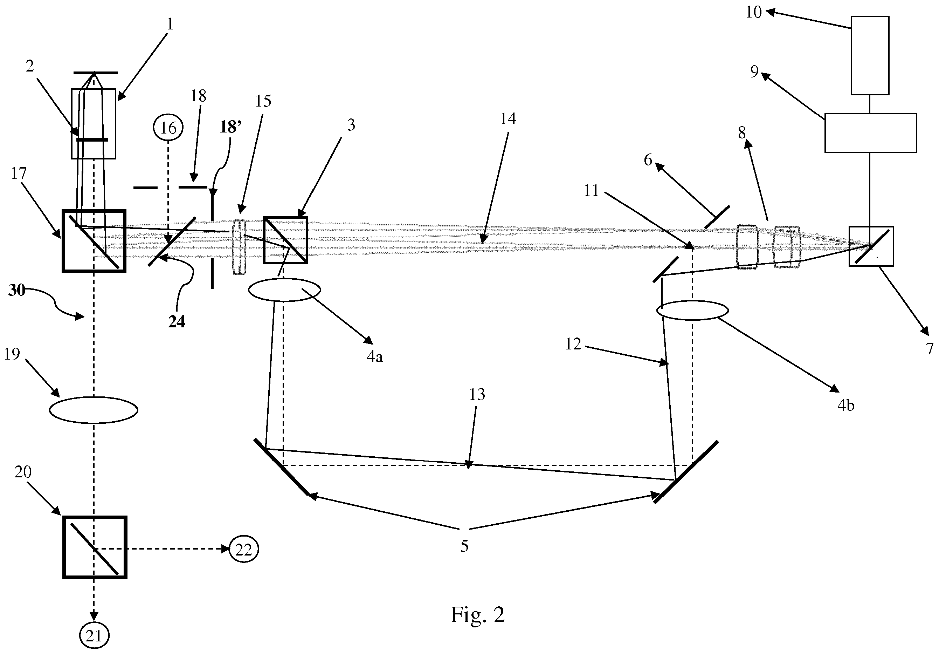

Figur 2 zeigt die Ausführungsform eines Weitfeld-Mikroskops mit einer daran angepassten Beleuchtungseinheit 31, wobei der prinzipielle Aufbau der Beleuchtungseinheit 31 mit derjenigen aus Figur 1 übereinstimmt. Insofern soll auf eine erneute Erörterung übereinstimmender Bestandteile verzichtet werden.

Als wesentliche Bestandteile des Mikroskops 30 - neben der Beleuchtungseinheit 31 - sind in Figur 2 das Mikroskopobjektiv 1, eine Tubuslinse 19 sowie ein Teiler 20 dargestellt, der eine Aufspaltung des Beobachtungsstrahlengangs in einen visuellen Strahlengang 21 und einen Dokumentationsstrahlengang 22 vornimmt. Während der visuelle Strahlengang 21 zu einem (nicht dargestellten) Okular des Mikroskops 30 führt, führt der Dokumentationsstrahlengang 22 in der Regel zu einer Kamera. Um den oder die Beleuchtungsstrahlengänge von dem Beobachtungsstrahlengang zu trennen ist im vorliegend betrachteten Anwendungsfall ein spezifischer Fluoreszenzfilterblock 17 vorgesehen. Mit 16 ist die standardmäßige Fluoreszenzauflichtachse des Mikroskops bezeichnet, die über die Schnittstelle 18 in das Mikroskop eingekoppelt wird. Mit 18' steht eine weitere Schnittstelle zur Verfügung, die zur Einkopplung zusätzlicher Beleuchtungseinheiten genutzt werden kann.

Über die Fluoreszenzauflichtachse 16 und einen Spiegel 24 wird Anregungslicht in üblicher Weise über den Fluoreszenzfilterblock zum Mikroskopobjektiv 1 geleitet. Vom Objekt emittiertes Fluoreszenzlicht gelangt wiederum über das Mikroskopobjektiv 1 und den Fluoreszenzfilterblock 17 zur Tubuslinse 19 und von dort in den visuellen Strahlengang bzw. Dokumentationsstrahlengang.

Der konoskopische und orthoskopische Strahlengang wird durch Umschalten des Spiegels 34 zum Objektiv 1 geführt. Der Spiegel 34 kann auch als dichroitischer oder polarisierender Strahlenteiler unter Verzicht einer Umschaltung fix ausgeführt werden. Die Funktionsweise der beiden Strahlengänge wurde bereits beschrieben und soll nicht weiter erläutert werden. Auf diese Weise ist ein Fluoreszenzmikroskop mit einem TIRF-, Manipulations- und Multi-Photon-Mikroskop kombinier- bzw. erweiterbar.

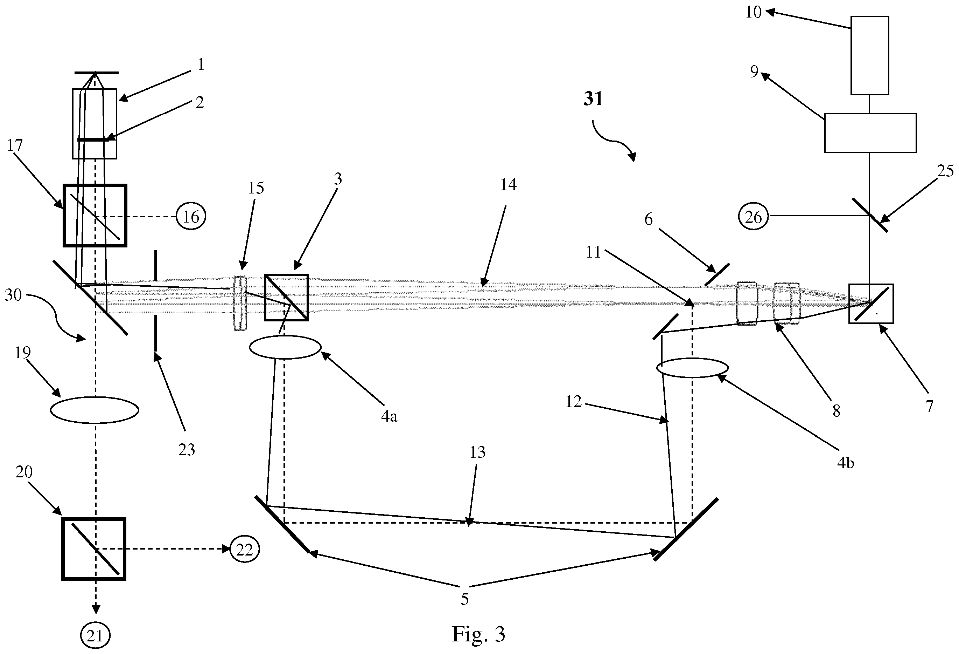

Figur 3 zeigt eine andere mögliche Anordnung ausgehend von dem in Figur 1 dargestellten prinzipiellen Aufbau für die konfokale Mikroskopie.

Die Fluoreszenzauflichtachse ist wiederum mit 16 bezeichnet, der Fluoreszenzfilterblock mit 17. Vom Objekt emittiertes Fluoreszenzlicht gelangt wiederum über das Mikroskopobjektiv 1 und den Fluoreszenzfilterblock 17 zur Tubuslinse 19 und von dort in den visuellen Strahlengang bzw. Dokumentationsstrahlengang (vgl. Erläuterungen zu Fig. 2). Die Beleuchtungseinheit 31 wird um den spektralen Strahlenteiler 25 und den konfokalen Detektionsstrahlengang 26 zum konfokalen Rastermikroskop erweitert. Die Bilderzeugung bei konfokaler Abbildung erfolgt nach dem bekannten Prinzip der konfokalen Mikroskopie. Im der vorliegenden Ausführungsform hat die Verstelleinheit 7 die Funktion des konfokalen Scan- und Descanspiegels, die das Anregungslicht ortsgenau zur Probe und das detektierte Licht über einen spektralen Strahlteiler 25 zurück zum statisch positionierten konfokalen Detektor 26 führt.

Bei der Führung des Anregungslichts durch den konoskopischen Strahlengang 13 wird die Detektion des von der Probe emittierten, gestreuten oder reflektierten Lichts mit Hilfe einer konventionellen Abbildung in einen Dokumentationsstrahlengang 22 geführt.

In dieser Form ist ein Fluoreszenzmikroskop mit einem TIRF-, Manipulations-, Multi-Photon und konfokalen Rastermikroskop kombinier- bzw. erweiterbar.

### Bezugszeichenliste

- 1: Objektiv
- 2: Austrittspupille
- 3: Strahlteiler
- 4a, 4b: optisches System (Betrandlinsen-Einheit)
- 5: Spiegelsystem
- 6: Spiegelfläche
- 7: Verstelleinheit, Scanner
- 8: Scanokular
- 9: Wellenlängenselektor, AOTF
- 10: Lichtquelle, Laser
- 11: Bildebene des Scanokulars
- 12: Laserstrahl
- 13: konoskopischer Strahlengang
- 14: orthoskopischer Strahlengang
- 15: Scanlinse
- 16: Fluoreszenzauflichtachse
- 17: Fluoreszenzfilterblock
- 18, 18': Schnittstellen für weitere Beleuchtungseinheiten
- 19: Tubuslinse
- 20: Teiler
- 21: visueller Beobachtungsstrahlengang
- 22: Dokumentationsstrahlengang
- 23: konfokale Schnittstelle
- 24: Spiegel
- 25: spektraler Strahlenteiler
- 26: konfokaler Detektionsstrahlengang
- 27: lichtdurchlässiger Bereich, Öffnung
- 28: verspiegelter Bereich
- 29: Zusatzoptik
- 30: Mikroskop
- 31: Beleuchtungseinheit
- 32: Beleuchtungsstrahlengang
- 33: Hauptachse des Beleuchtungsstrahlengangs

## Patentansprüche

1. Mikroskop (30) mit einem Objektiv (1) und einer Beleuchtungseinheit (31) zur wahlweisen Erzeugung eines durch das Objektiv (1) verlaufenden orthoskopischen Strahlengangs (14) zur punktförmigen Rasterbeleuchtung und eines durch das Objektiv (1) verlaufenden konoskopischen Strahlengangs (13) zur evaneszenten Beleuchtung eines Objekts, wobei die Beleuchtungseinheit aufweist:
eine Lichtquelle (10) zur Erzeugung von Beleuchtungsstrahlen entlang eines Beleuchtungsstrahlengangs (32),
eine Verstelleinheit (7) zur Ablenkung des Beleuchtungsstrahlengangs (32),
ein der Verstelleinheit (7) nachgeordnetes Scanokular (8) zur Fokussierung der Beleuchtungsstrahlen in eine Bildebene (11) des Scanokulars (8), und
eine in der Bildebene (11) des Scanokulars (8) angeordnete Spiegelfläche (6) mit einem lichtdurchlässigen Bereich (27) zur Erzeugung des orthoskopischen Strahlengangs (14) und mit einem dem Scanokular (8) zugewandten zumindest teilweise verspiegelten Bereich (28) zur Erzeugung des konoskopischen Strahlengangs (13) aus dem Beleuchtungsstrahlengang (32),
wobei die Bildebene (11) des Scanokulars (8) bezogen auf den konoskopischen Strahlengang (13) in einer zur Austrittspupille (2) des Objektivs (1) konjugierten Ebene liegt und wobei zur Erzeugung des orthoskopischen Strahlengangs (14) als auch des konoskopischen Strahlengangs (13) das selbe Scanokular (8) vorgesehen ist.

2. Mikroskop nach Anspruch 1, **dadurch gekennzeichnet, dass** der lichtdurchlässige Bereich (27) der Spiegelfläche (6) eine Öffnung in einem Spiegel darstellt, wobei die Öffnung zentriert zur Hauptachse (33) des Beleuchtungsstrahlengangs (32) angeordnet ist.

3. Mikroskop nach Anspruch 1 oder 2, **dadurch gekennzeichnet, dass** die Spiegelfläche (6) geneigt zur Hauptachse (33) des Beleuchtungsstrahlengangs (32) angeordnet ist.

4. Mikroskop nach Anspruch 3, **dadurch gekennzeichnet, dass** die Spiegelfläche (6) um 45° geneigt zur Hauptachse (33) des Beleucht ungsstrahlengangs (32) angeordnet ist.

5. Mikroskop nach einem der vorhergehenden Ansprüche, **dadurch gekennzeichnet, dass** der lichtdurchlässige Bereich (27) der Spiegelfläche (6) eine geometrische Form besitzt, deren Projektion auf eine Ebene senkrecht zur Hauptachse (33) des Beleuchtungsstrahlengangs (32) eine Kreisform ergibt.

6. Mikroskop nach Anspruch 5, **dadurch gekennzeichnet, dass** der lichtdurchlässige Bereich der Spiegelfläche (6) die geometrische Form einer Ellipse besitzt.

7. Mikroskop nach Anspruch 5 oder 6, **dadurch gekennzeichnet, dass** die Projektion des lichtdurchlässigen Bereichs (27) auf die Ebene kongruent zu einer Abbildung der Austrittspupille (2) des Objektivs (1) bei der Grenzapertur der Totalreflexion im konoskopischen Strahlengang (13) ist.

8. Mikroskop nach einem der vorhergehenden Ansprüche, **dadurch gekennzeichnet, dass** eine Zusatzoptik (29) zur Einkopplung des konoskopischen Strahlengangs (13) in das Mikroskopobjektiv (1) vorgesehen ist.

9. Mikroskop nach Anspruch 8, **dadurch gekennzeichnet, dass** die Zusatzoptik (29) ein Spiegelsystem (5) und ein abgestimmtes optisches System (4a, 4b) aufweist, das derart ausgelegt ist, dass der Fokus der Beleuchtungsstrahlen des konoskopischen Strahlengangs (13) in der Austrittspupille (2) des Objektivs (1) liegt.

10. Mikroskop nach Anspruch 9, **dadurch gekennzeichnet, dass** das abgestimmte optische System zwei Bertrandlinsen (4a, 4b) aufweist.

11. Mikroskop nach einem der Ansprüche 8 bis 10, **dadurch gekennzeichnet, dass** die Zusatzoptik einen Strahlteiler (3) aufweist, der im orthoskopischen Strahlengang (14) angeordnet ist und den konoskopischen Strahlengang (13) mit dem orthoskopischen Strahlengang (14) zusammenführt.

12. Mikroskop nach Anspruch 11, **dadurch gekennzeichnet, dass** der Strahlteiler (3) ein Polarisationsstrahlteiler ist, wobei im orthoskopischen oder im konoskopischen Strahlengang (13; 14) eine λ/2-Platte angeordnet ist.

13. Mikroskop nach einem der vorhergehenden Ansprüche, **dadurch gekennzeichnet, dass** als Lichtquelle (10) ein oder mehrere Laser zur Erzeugung von Beleuchtungsstrahlen eines bestimmten Wellenlängenspektrums vorhanden sind, wobei im Beleuchtungsstrahlengang (32) ein Wellenlängenselektor (9) angeordnet ist.

14. Mikroskop nach Anspruch 13, **dadurch gekennzeichnet, dass** der Wellenlängenselektor (9) ein durchstimmbarer akusto-optischer Filter (AOTF) ist.

15. Verfahren zur wahlweisen Erzeugung eines durch ein Objektiv (1) eines Mikroskops (30) verlaufenden orthoskopischen Strahlengangs (14) zur punktförmigen Rasterbeleuchtung und eines durch das Objektiv (1) verlaufenden konoskopischen Strahlengangs (13) zur evaneszenten Beleuchtung eines Objekts,
**dadurch gekennzeichnet, dass**
Beleuchtungsstrahlen entlang eines Beleuchtungsstrahlengangs mittels einer Lichtquelle (10) erzeugt werden,
der Beleuchtungsstrahlengang (32) mittels einer Verstelleinheit (7) abgelenkt wird,
die Beleuchtungsstrahlen mittels eines der Verstelleinheit (7) nachgeordneten Scanokulars (8) in eine Bildebene (11) des Scanokulars (8) fokussiert werden und
eine Spiegelfläche (6) mit einem lichtdurchlässigen Bereich (27) und mit einem dem Scanokular (8) zugewandten zumindest teilweise verspiegelten Bereich (28) in der Bildebene (11) des Scanokulars (8) angeordnet wird,
wobei die Bildebene (11) des Scanokulars (8) bezogen auf den konoskopischen Strahlengang (13) in einer zur Austrittspupille (2) des Objektivs (1) konjugierten Ebene liegt, und
wobei der orthoskopische Strahlengang (14) dadurch erzeugt wird, dass der Beleuchtungsstrahlengang mittels der Verstelleinheit (7) derart abgelenkt wird, dass er durch den lichtdurchlässigen Bereich (27) der Spiegelfläche (6) tritt, und der konoskopische Strahlengang (13) derart erzeugt wird, dass der Beleuchtungsstrahlengang (32) mittels der Verstelleinheit (7) derart abgelenkt wird, dass er auf den verspiegelten Bereich (28) der Spiegelfläche (6) trifft und wobei zur Erzeugung des orthoskopischen Strahlengangs (14) als auch des konoskopischen Strahlengangs (13) das selbe Scanokular (8) verwendet wird.

16. Verwendung eines Mikroskops nach den Ansprüchen 1 bis 14 oder eines Verfahrens nach Anspruch 15 zum schnellen Wechsel zwischen punktförmiger Rasterbeleuchtung und evaneszenter Beleuchtung eines Objekts in einem Mikroskop (30).

17. Verwendung nach Anspruch 16 für ein scannendes Abbildungsverfahren.

18. Verwendung nach Anspruch 17, bei der das scannende Abbildungsverfahren zumindest eines der folgenden Verfahren darstellt: Totalinterne Fluoreszenzmikroskopie (TIRFM), Rastermikroskopie, konfokale Rastermikroskopie, FRAP (Flurescence Recovery After Photo Bleaching), FRET (Förster Resonance Energy Transfer) und Multiphotonen-Mikroskopie.

## Claims

1. Microscope (30) with an objective (1) and an illumination unit (31) for selectively generating an orthoscopic beam path (14) extending through the objective (1) for dot-scanning illumination and a conoscopic beam path (13) extending through the objective (1) for evanescent illumination of an object, wherein the illumination unit comprises
a light source (10) for generating illumination beams along an illumination beam path (32),
an adjustment unit (7) for deflecting the illumination beam path (32),
a scan ocular (8) arranged downstream of the adjustment unit (7) for focusing the illumination beams into an image plane (11) of the scan ocular (8), and
a mirror surface (6) arranged in the image plane (11) of the scan ocular (8) with a light-transmitting region (27) for generating the orthoscopic beam path (14) and with an at least partially mirrored region (28) facing the scan ocular (8) for generating the conoscopic beam path (13) from the illumination beam path (32),
wherein the image plane (11) of the scan ocular (8) lies, relative to the conoscopic beam path (13), in a plane conjugate to the exit pupil (2) of the objective (1), and wherein the same scan ocular (8) is provided for generating the orthoscopic beam path (14) as well as the conoscopic beam path (13).

2. Microscope according to claim 1, **characterized in that** the light-transmitting region (27) of the mirror surface (6) represents an opening in a mirror, the opening being arranged centered to the main axis (33) of the illumination beam path (32).

3. Microscope according to claim 1 or 2, **characterized in that** the mirror surface (6) is arranged inclined to the main axis (33) of the illumination beam path (32).

4. Microscope according to claim 3, **characterized in that** the mirror surface (6) is arranged inclined by 45° to the main axis (33) of the illumination beam path (32).

5. Microscope according to any one of the preceding claims, **characterized in that** the light-transmitting region (27) of the mirror surface (6) has a geometrical shape whose projection onto a plane perpendicular to the main axis (33) of the illumination beam path (32) results in a circular shape.

6. Microscope according to claim 5, **characterized in that** the light-transmitting region of the mirror surface (6) has the geometrical shape of an ellipse.

7. Microscope according to claim 5 or 6, **characterized in that** the projection of the light-transmitting region (27) onto the plane is congruent to an image of the exit pupil (2) of the objective (1) at the boundary aperture of total reflection in the conoscopic beam path (13).

8. Microscope according to any one of the preceding claims, **characterized in that** additional optics (29) is provided for coupling the conoscopic beam path (13) into the microscope objective (1).

9. Microscope according to claim 8, **characterized in that** the additional optics (29) comprises a mirror system (5) and a tuned optical system (4a, 4b) which is designed in such a way that the focus of the illuminating rays of the conoscopic beam path (13) lies in the exit pupil (2) of the objective (1).

10. Microscope according to claim 9, **characterized in that** the tuned optical system comprises two Bertrand lenses (4a, 4b).

11. Microscope according to any one of claims 8 to 10, **characterized in that** the additional optics comprises a beam splitter (3) which is arranged in the orthoscopic beam path (14) and merges the conoscopic beam path (13) with the orthoscopic beam path (14).

12. Microscope according to claim 11, **characterized in that** the beam splitter (3) is a polarization beam splitter, wherein a λ/2 plate is arranged in the orthoscopic or in the conoscopic beam path (13; 14).

13. Microscope according to any one of the preceding claims, **characterized in that** one or more lasers for generating illumination beams of a specific wavelength spectrum are present as light source (10), a wavelength selector (9) being arranged in the illumination beam path (32).

14. Microscope according to claim 13, **characterized in that** the wavelength selector (9) is a tunable acousto-optical filter (AOTF).

15. Method for selectively generating an orthoscopic beam path (14) extending through an objective (1) of a microscope (30) for dot-scanning illumination and a conoscopic beam path (13) extending through the objective (1) for evanescent illumination of an object,
**characterized in that**
illumination beams are generated along an illumination beam path by a light source (10),
the illumination beam path (32) is deflected by an adjustment unit (7),
the illumination beams are focused into an image plane (11) of a scan ocular (8) arranged downstream of the adjustment unit (7) by means of the scan ocular (8), and
a mirror surface (6) with a light-transmitting region (27) and with an at least partially mirrored region (28) facing the scan ocular (8) is arranged in the image plane (11) of the scan ocular (8),
wherein the image plane (11) of the scan ocular (8) lies in a plane conjugate to the exit pupil (2) of the objective (1) relative to the conoscopic beam path (13), and
wherein the orthoscopic beam path (14) is produced by deflecting the illumination beam path by means of the adjusting unit (7) in such a way that it passes through the light-transmitting region (27) of the mirror surface (6), and the conoscopic beam path (13) is produced in such a way that the illumination beam path (32) is deflected by means of the adjusting unit (7) in such a way that it strikes the mirrored region (28) of the mirror surface (6), and wherein the same scan ocular (8) is used for generating the orthoscopic beam path (14) as well as the conoscopic beam path (13).

16. Use of a microscope according to claims 1 to 14 or a method according to claim 15 for rapid change between dot-scanning illumination and evanescent illumination of an object in a microscope (30).

17. Use according to claim 16 for a scanning imaging method.

18. Use according to claim 17, wherein the scanning imaging method is at least one of the following methods: Total internal fluorescence microscopy (TIRFM), scanning microscopy, confocal scanning microscopy, FRAP (Flurescence Recovery After Photo Bleaching), FRET (Förster Resonance Energy Transfer) and multiphoton microscopy.

## Revendications

1. Microscope (30) avec un objectif (1) et une unité d'éclairage (31) pour générer sélectivement un trajet de faisceau orthoscopique (14) s'étendant à travers l'objectif (1) pour un éclairage de trame ponctuel et un trajet de faisceau conoscopique (13) s'étendant à travers l'objectif (1) pour un éclairage évanescent d'un objet, dans lequel l'unité d'éclairage comprend
une source de lumière (10) pour générer des faisceaux d'éclairage le long d'un trajet de faisceau d'éclairage (32),
une unité de réglage (7) pour dévier le trajet du faisceau d'éclairage (32),
un oculaire de balayage (8) disposé en aval de l'unité de réglage (7) pour focaliser les faisceaux d'éclairage dans un plan d'image (11) de l'oculaire de balayage (8), et
une surface de miroir (6) disposée dans le plan d'image (11) de l'oculaire de balayage (8) avec une zone de transmission de lumière (27) pour la génération du trajet de faisceau orthoscopique (14) et avec une zone au moins partiellement réfléchie (28) tournée vers l'oculaire de balayage (8) pour la génération du trajet de faisceau conoscopique (13) à partir du trajet de faisceau d'éclairage (32),
dans lequel le plan image (11) de l'oculaire de balayage (8), par rapport au trajet du faisceau conoscopique (13), se trouve dans un plan conjugué à la pupille de sortie (2) de l'objectif (1), et dans lequel le même oculaire de balayage (8) est prévu pour générer le trajet du faisceau orthoscopique (14) ainsi que le trajet du faisceau conoscopique (13).

2. Microscope selon la revendication 1, **caractérisé en ce que** la zone de transmission de la lumière (27) de la surface du miroir (6) représente une ouverture dans un miroir, l'ouverture étant disposée de manière centrée sur l'axe principal (33) du trajet du faisceau d'éclairage (32).

3. Microscope selon la revendication 1 ou 2, **caractérisé en ce que** la surface du miroir (6) est disposée de manière inclinée par rapport à l'axe principal (33) du trajet du faisceau d'éclairage (32).

4. Microscope selon la revendication 3, **caractérisé en ce que** la surface du miroir (6) est disposée inclinée de 45° par rapport à l'axe principal (33) du trajet du faisceau d'éclairage (32).

5. Microscope selon l'une des revendications précédentes, **caractérisé en ce que** la partie transmettant la lumière (27) de la surface du miroir (6) a une forme géométrique dont la projection sur un plan perpendiculaire à l'axe principal (33) du trajet du faisceau d'éclairage (32) résulte en une forme circulaire.

6. Microscope selon la revendication 5, **caractérisé en ce que** la zone de transmission de la lumière de la surface du miroir (6) a la forme géométrique d'une ellipse.

7. Microscope selon la revendication 5 ou 6, **caractérisé en ce que** la projection de la zone de transmission de la lumière (27) sur le plan est congruente avec une image de la pupille de sortie (2) de l'objectif (1) à l'ouverture limite de la réflexion totale dans le trajet du faisceau conoscopique (13).

8. Microscope selon l'une des revendications précédentes, **caractérisé en ce qu'**un optique supplémentaire (29) est prévu pour coupler le trajet du faisceau conoscopique (13) dans l'objectif du microscope (1).

9. Microscope selon la revendication 8, **caractérisé en ce que** l'optique supplémentaire (29) comprend un système de miroir (5) et un système optique accordé (4a, 4b) qui est conçu de telle sorte que le foyer des rayons d'éclairage du trajet du faisceau conoscopique (13) se trouve dans la pupille de sortie (2) de l'objectif (1).

10. Microscope selon la revendication 9, **caractérisé en ce que** le système optique accordé comprend deux lentilles Bertrand (4a, 4b).

11. Microscope selon l'une des revendications 8 à 10, **caractérisé en ce que** l'optique supplémentaire comporte un séparateur de faisceau (3) qui est disposé dans le trajet de faisceau orthoscopique (14) et qui réunit le trajet de faisceau conoscopique (13) et le trajet de faisceau orthoscopique (14).

12. Microscope selon la revendication 11, **caractérisé en ce que** le séparateur de faisceau (3) est un séparateur de faisceau de polarisation, dans lequel une plaque λ/2 est disposée dans le trajet du faisceau orthoscopique ou conoscopique (13 ; 14).

13. Microscope selon l'une des revendications précédentes, **caractérisé en ce qu'**un ou plusieurs lasers pour générer des faisceaux d'éclairage d'un spectre de longueur d'onde spécifique sont présents comme source de lumière (10), un sélecteur de longueur d'onde (9) étant disposé dans le trajet du faisceau d'éclairage (32).

14. Microscope selon la revendication 13, **caractérisé en ce que** le sélecteur de longueur d'onde (9) est un filtre acousto-optique accordable (AOTF).

15. Procédé de génération sélective d'un trajet de faisceau orthoscopique (14) s'étendant à travers un objectif (1) d'un microscope (30) pour l'éclairage de trame ponctuel et d'un trajet de faisceau conoscopique (13) s'étendant à travers l'objectif (1) pour l'éclairage évanescent d'un objet,
**caractérisé en ce que**
des faisceaux d'éclairage sont générés le long d'un trajet de faisceau d'éclairage au moyen d'une source de lumière (10),
le trajet du faisceau d'éclairage (32) est dévié au moyen d'une unité de réglage (7),
les faisceaux d'éclairage sont focalisés au moyen d'un oculaire de balayage (8) disposé en aval de l'unité de réglage (7) dans un plan d'image (11) de l'oculaire de balayage (8), et
une surface de miroir (6) avec une zone de transmission de la lumière (27) et une zone au moins partiellement réfléchie (28) tournée vers l'oculaire de balayage (8) est disposée dans le plan d'image (11) de l'oculaire de balayage (8),
dans lequel le plan image (11) de l'oculaire de balayage (8), par rapport au trajet du faisceau conoscopique (13), se trouve dans un plan conjugué à la pupille de sortie (2) de l'objectif (1), et
dans lequel la trajectoire orthoscopique du faisceau (14) est produite par déviation de la trajectoire du faisceau d'éclairage au moyen de l'unité de réglage (7) de telle sorte qu'elle traverse la zone de transmission de la lumière (27) de la surface du miroir (6), et la trajectoire conoscopique du faisceau (13) est produite de telle sorte que la trajectoire du faisceau d'éclairage (32) est déviée au moyen de l'unité de réglage (7) de telle sorte qu'elle frappe la zone réfléchie (28) de la surface du miroir (6), et dans lequel le même oculaire de balayage (8) est utilisé pour générer le trajet du faisceau orthoscopique (14) ainsi que le trajet du faisceau conoscopique (13).

16. Utilisation d'un microscope selon les revendications 1 à 14 ou d'une méthode selon la revendication 15 pour le changement rapide entre l'illumination ponctuelle de la trame et l'illumination évanescente d'un objet dans un microscope (30).

17. Utilisation selon la revendication 16 pour une méthode d'imagerie par balayage.

18. Utilisation selon la revendication 17, dans laquelle la méthode d'imagerie par balayage est au moins l'une des méthodes suivantes : Microscopie à fluorescence interne totale (TIRFM), microscopie à balayage, microscopie confocale à balayage, FRAP (récupération de flurescence après photoblanchiment), FRET (transfert d'énergie de résonance de Förster) et microscopie multiphoton.
